# EUROPEAN PATENT APPLICATION

(11) **EP 1 541 337 A1**
(43) Date of publication of application: **15.06.2005**
(21) Application number: 03388083.2
(22) Date of filing: 01.12.2003
(51) Int. Cl.: B32B 27/12, B32B 3/06

(54) **Method of producing a membrane and a membrane**

(71) Applicant: Icopal Plastic Membranes A/S, 2730 Herlev (DK)
(72) Inventor: The designation of the inventor has not yet been filed
(74) Representative: Nielsen, Henrik Sten

(57) **Abstract**

A method of producing a membrane, in particular a weather protection membrane for use as a scaffold membrane comprises providing a reinforcing regularly laid, woven or non-woven fabric, grid, mesh or scrim comprising a dimensionally mechanical stable polymer fibre, filament or wire material. Furthermore, a first foil of a polymer material is provided, preferably a weather resistant polymer material of a single layer configuration or a multilayer configuration, and a second foil of polymer material is provided, preferably a weather resistant polymer material of a single layer configuration or a multilayer configuration. Two bands of polymer material are further provided, preferably a weather resistant polymer material of a single layer configuration or a multilayer configuration including woven or non-woven layer or layers and exhibiting low frictional properties. The reinforcing fabric, grid, mesh or scrim is interlaid and sandwiched between said first and second foils and the bands are positioned edgewise at the first and second foils, and at least partly overlapping the reinforcing fabric, grid, mesh or scrim, the first and second foils are laminated together and to the bands for sandwiching foils for providing an integral structure.

## Description

The present invention relates generally to the technical field of membranes and a method of producing membranes, in particular weather protection membranes. The present invention relates in particular to a method of producing membranes for use in the field of house building or construction and integrally including edge reinforcing bands such as 'Keder' bands for fixating the membranes to supporting structures such as scaffolds, etc. The membranes may be used as a scaffold sheeting, a temporary roof cover, an underroof membrane, tarpaulins, geo membranes, world aid shelters, military shelters, green house or agricultural membranes, festival or leisure tents, etc. The present invention also relates to the membrane, in particular a weather protection membrane.

Within the technical field of membranes, in particular membranes for use in house building or construction, a number of membrane structures are known and described in the literature, such as in US 5,229,197, EP 0 491 454, DE 29 805 622, EP 0 177 364, US 5,422,179, US 5,860,225, EP 0 855 479, JP 2162037, EP 0 708 212, WO 97/00362. Further, within the technical field of membranes, certain techniques including methods of producing and machines for the production of membranes are known, e.g. from DK 105 423, DK 136 082, DE OS 1635579 and DE OS 2030203. Reference is made to the above patent applications and patents and the above US patents are further hereby incorporated in the present specification by reference.

Reference is specifically made to applicant's published international patent application, application number PCT/DK02/00187, publication number WO 02/075071 in which a particular technique of producing grid or mesh reinforced composite membranes is described in greater details. The techniques described in the applicant's above mentioned international patent application is to be construed part of the present specification.

In the use of membranes, such as weather protection or scaffold membranes for house buildings, the membranes have to fulfil certain requirements in relation to the intentional use of the membranes and also the application of the membranes at the building sites such as requirements in relation to puncture resistance of the membrane structure which characteristic may be measured according to specific requirements or standards. Consequently, the membranes have to comply with certain requirements as to strength, as defined in relevant ISO, BS, EN or DIN standards and have additionally to fulfil certain additional characteristics, which are often difficult to measure or specifically determine, which characteristics are, however, within the industry, often referred to as toughness, crack resistance, abrasive resistance, draping and noise characteristics.

It is to be realised that the membranes to be used in the construction industry or equivalent industries have, apart from the above properties, also to be easily folded and comply with certain physical configurations and therefore, the membranes have to fulfil certain standards, as to draping, known from the clothing industry as a term, and further, the membranes to be used in housings, need to be extremely flexible and lightweight for allowing the workers to handle the membranes at the building site without damaging by puncturing, distorting, ripping the membranes and still further, should be of a type preventing the membranes from generating noise provided the membranes be exposed to wind pressure, fluctuation from ventilation air, impact or other mechanical influence, even below roofing materials such as tiles. Further, the membranes should, for obvious reasons, exhibit characteristics preventing the membranes from cracking or being torn apart through abrasive impact and still further should be resistant to delamination. In most applications, the relevant building membranes are further to constitute watertight or in certain applications waterproof structures.

A particular application of membranes of the above kind are within this technique field of scaffold structures in which the membranes are provided with an edge reinforcement band in which a flexible string commonly known as a 'Keder' string is enclosed by means of which the membrane may be suspended between two hollow profiled bearing elements constituting additional components or integral parts of the scaffold. A number of techniques relating to the mounting of scaffold membranes relative to supporting grid structures are described in the literature, e.g.

US 6,145,526, US 6,564,513, GB 2 359 312, US 6,530,165, and US 6,339,889, reference is made to the above patent applications and patents and the above US patents are further hereby incorporated in the present specification by reference.

The publication US 6,145,526 describes a system for securing a fabric cover of a fabric covered building to a framework or foundation of the building. Along each side of the fabric cover, a tie-down member is fastened so as to extent substantially from one end of the fabric cover to the opposite end. The member is most conveniently a pipe inserted in pockets formed along the side of the fabric cover, the member being exposed at intervals by cut-outs in the pockets. The pockets may be formed and fastened by sewing. However, the punctures in the fabric that result from the sewing may cause water ingress and heat-sealing of the fabric may be used to form the pockets for providing a stronger seam with no punctures to weaken the fabric at the seam.

The publication US 6,564,513 describes a building structure of the type comprising arched frame members supporting panels of flexible material such as weather resistant fabric. The flexible material is provided with means for attachment to a connecting member. The connecting member comprises means for slidably engaging the attachments of the flexible material.

The prior art technique of producing scaffold membranes for use in combination with a supporting scaffold or grid structure and having edgewise extending 'Keder' bands is based on a manual technique of stitching and sewing the 'Keder' bands to the edge parts of the membrane after the membrane has been cut into a specific size. The technique of manually producing the scaffold membrane by utilising e.g. the high strength and high compliance composite grid reinforced membranes described in the applicant's above identified international patent application has not to any substantial extent been industrialised or automated as the origin of the 'Keder' band is the sail manufactory industry in which sails generally have been produced manually according to the specific requirements of the boat owner and for complying with specific dimensions of the boat in question.

It is an object of the present invention to provide a novel technique of inline manufacturing 'Keder' band reinforced or generally edgewise reinforced composite membranes, in particular membranes including reinforcing fabrics, grids, meshes or scrims according to the technique described in applicant's above identified international patent application for allowing in the integral production process the obtainment of high strength bond between the reinforcing bands and the composite foils of the membrane structure.

It is a feature of the present invention that the in line manufacturing process of producing 'Keder' band or edge reinforced membranes allows the manufacture of scaffold membranes of specific dimensions at low costs and according to high production standard and high tolerance requirements.

It is an advantage of the present invention that the technique according to the present invention of producing edge reinforced scaffold membranes may be easily established by a simple modification of the prior art technique of producing fabric, grid, mesh or scrim reinforced membranes according to the technique described in applicant's above mentioned international patent application.

The above object, the above feature and the above advantage together with numerous other objects, features and advantages which will be evident from the below description, are according to the teachings of the present invention obtained by a method of producing a membrane, in particular a weather protection membrane for use in the field of house building or construction, in particular for use as a scaffold membrane, the method comprising:
providing a reinforcing regularly laid, woven or non-woven fabric, grid, mesh or scrim comprising a dimensionally mechanical stable polymer fibre, filament or wire material, such as a homogeneous or non-homogeneous fibre material, e.g. a monofilament, a yarn, a tape, a split film, fibre or a multifilament based material, a woven, a braided, a non-woven or a combined woven and non-woven fibrous material,
providing a first foil of a polymer material, preferably a weather resistant polymer material of a single layer configuration or a multilayer configuration,
providing a second foil of polymer material, preferably a weather resistant polymer material of a single layer configuration or a multilayer configuration,
providing two bands of polymer material, preferably a weather resistant polymer material of a single layer configuration or a multilayer configuration including woven or non-woven layer or layers and exhibiting low frictional properties, and
interlaying and sandwiching the reinforcing fabric, grid, mesh or scrim between the first and second foils and positioning the bands edgewise at the first and second foils, and at least partly overlapping the reinforcing fabric, grid, mesh or scrim, and laminating the first and second foils together and to the bands for sandwiching foils within the sandwich structure and for providing an integral structure in which the bands are laminated integrally to one of the foils or both the foils, and at least partly overlapping the reinforcing fabric, grid, mesh or scrim.

The above object, the above feature and the above advantage together with numerous other objects, features and advantages which will be evident from the below description, are according to the teachings of the present invention obtained by a membrane, in particular a membrane, in particular a weather protection membrane for use in the field of house building or construction, in particular for use as a scaffold membrane, scaffold sheeting, tarpaulins, an underroof cover, a temporary roof cover, geo membranes, world aid shelters, military shelters, green house or agricultural membranes, festival or leisure tents, etc., comprising:
a reinforcing regularly laid, woven or non-woven fabric, grid, mesh or scrim comprising a dimensionally mechanical stable polymer fibre, filament or wire material, such as a homogeneous or non-homogeneous fibre material, e.g. a monofilament, a yarn, a tape, a split film, fibre or a multifilament based material, a woven, a braided, a non-woven or a combined woven and non-woven fibrous material,
a first foil of a polymer material, preferably a weather resistant polymer material of a single layer configuration or a multilayer configuration,
a second foil of polymer material, preferably a weather resistant polymer material of a single layer configuration or a multilayer configuration,
two bands of polymer material, preferably a weather resistant polymer material of a single layer configuration or a multilayer configuration including woven or non-woven layer or layers and exhibiting low frictional properties,
the reinforcing fabric, grid, mesh or scrim being interlayered in a sandwich structure between the first and second foils, and
the bands being positioned edgewise at the first and second foils, and providing an integral structure in which the bands are laminated integrally to one of the foils or both of the foils, and at least partly overlapping the reinforcing fabric, grid, mesh or scrim.

It is an advantageous feature of the present invention, that two bands of polymer materials, preferably weather resistant polymer materials exhibiting fairly low frictional properties are laminated between the two foils of the composite foil assembly or to the one side being the top surface or the bottom surface of the composite foil assembly by utilising the facility of the production process of producing the composite fabric, grid, mesh or scrim reinforced membrane for integrally producing the edge reinforcing band as an integral part of the membrane structure. Furthermore, according to an essential feature of the present invention, the two bands of polymer materials which are laminated to the sandwiched structure or into the sandwiched structure through one of the foils or alternatively between the two foils, respectively, are positioned so as to establish an overlap between said bands and said reinforcing fabric, grid, mesh or scrim.

It is to be realised that the membranes produced according to the present invention are intended to be used as scaffold sheeting or used for similar application in which the membrane may be exposed to even extreme weather conditions including rough wind or storm and heavy rain or snow. Consequently, in a scaffold covering structure in which the membranes are mounted by means of 'Keder' strings included in the edge reinforcing bands characteristic of the present invention, the overall structure including the junction between the edge reinforcing bands and the composite foil assembly have to allow the structure to have high impact resistance.

In the present context, the following terms: Fabric, grid, mesh or scrim are to be construed comprising any fibre, filament, tape or wire structure of plastics material or any other relevant material, such as e.g. carbon reinforced plastic material etc. which exhibits an overall geometrical configuration resembling a fabric, grid, mesh or scrim or any other structure differing from a conventional fabric, grid, mesh or scrim, still fulfilling the same purpose as a reinforcing fabric, grid, mesh or scrim. In the below description, it is stated that the fabric, grid, mesh or scrim may have any appropriate configuration and also have varying dimensions and all embodiments complying with the above definition are consequently to be considered covered by the term fabric, grid, mesh or scrim.

It is to be realised that all mechanical properties, including mechanical strength, tear resistance, barrier properties, such as water or vapour tight, waterproof, etc., are in general to be considered in the context of use of the membranes, i.e. in the intentional application of the membranes, such as use for scaffold sheeting, underroof covering, etc. Still further, it is to be realised that the ability of resistance to a specific property, such as weather resistance or weather protection, is to be considered in relation to the relevant application and lifetime of the products in question, i.e. the membranes. Consequently, a relevant lifetime for membranes to be used in the construction industry in general is often of the order of a few months to a few years for the intentional application, being a temporary application and a so called permanent application, respectively, e.g. including 10 - 30 years, 30 - 50 years or even 50 - 100 years. The terms weather resistance and weather protection are, in accordance with the above statements, to be considered in the context of the intentional use of the membrane or the membranes in question. For e.g. a scaffolding foil, the weather resistance or weather protection ability is to be considered in conjunction with the relevant lifetime of the membrane or the membranes in question, which lifetime is typically of the order of a maximum of 1-2 years. For this kind of product, the expression weather resistance means that within the relevant lifetime, the membrane is resistant to the weather conditions including the wind, any rain or snow and also the exposure to the sun as the UV radiation from the sun deteriorates the membrane materials. As an alternative example, e.g. an underroof membrane which is not exposed to the sunlight, may, for the relevant lifetime of the order of 30-50 years or even more, be resistant to the exposure of wind and also water due to rain and snow and even the temperature variation from e.g. - 40°C to + 40°C or even larger temperature variations.

In the present context, the terms foil and membrane, which in some aspects may be considered synonymous, are distinctly used for separate intentional purposes. The term foil is used as the term defining an element or rather two elements of an overall foil or sheet configuration, which elements are together with the fabric, grid, mesh or scrim, composed into a composite structure constituting the membrane. It is to be understood that the foils which are combined with the reinforcing fabric, mesh, grid or scrim for establishing the membrane may themselves constitute membranes and be composed of individual foils, sheets, reinforcing fibres, fabrics, grids, meshes or scrims without deviating from the meaning of the term foil as used in the present context. Also, the membrane according to the present invention may for other applications be considered constituting a foil or alternatively a sheet and the interpretation of the membrane as a foil or a sheet is not to be construed limiting in the present context. The use of the terms foil and membrane as defined above, only serve the purpose of distinctly differentiating the components from which the membrane is composed, i.e. the foils and the reinforcing fabric, grid, mesh or scrim and the membrane itself.

According to the presently preferred embodiment of the method according to the present invention, the method further comprises prior to the interlaying and sandwiching of the reinforcing fabric, grid, mesh or scrim or grid between the first and second foils, the step of applying a lubricating material such as a lubricating oil or wax which is substantially non-aggressive to the polymer materials of the first and second foils and substantially non-dissolvable within the polymer materials of the first and second foils to at least a part of the fabric, grid, mesh or scrim for at least partly coating the fabric, grid, mesh or scrim with the lubricating material, and including in the step of interlaying and sandwiching the reinforcing fabric, grid, mesh or scrim provided with the lubricating material coating between the first and the second foils for allowing the lubricating material coated reinforcing fabric, grid, mesh or scrim to be movable relative to the first and second sandwiching foils within the sandwich structure.

It is contemplated that the combination of the integral bands and the loosely positioned grid or mesh as described in greater details in applicant's above mentioned international patent application allows the composite foil assembly to accommodate the mechanical stresses transmitted or generated by the mechanical fixation of the bands relative to the supporting structure such as the supporting scaffold. Consequently, it is contemplated that the integration of the edge reinforcing bands into the composite foil assembly may only be provided without risking the mechanical strength of the composite foil assembly provided the composite foil assembly be produced in accordance with the teachings of applicant's above mentioned international patent application, i.e. including the loosely positioned reinforcing fabric, grid, mesh or scrim.

According to the teachings of the present invention, the two foils used in the composite foil assembly and serving as a fixture for the edge reinforcing bands characteristic of the present invention may be produced as separate pre-fabricated foils which are pre-extruded and pre-hardened foils and laminated together in the sandwich structure according to the teachings of the present invention as defined above.

According to the presently preferred embodiment according to the present invention, at least one of the foils laminated together in the sandwich structure is extruded in conjunction with or prior to the step of laminating the first and second foil together in the sandwich structure according to the teachings of the present invention and consequently constitutes a soft foil for fastening the bands in the step of laminating the bands to the first and/or the second foil. It is to be understood that the step of laminating the bands to the composite foil structure may comprise laminating the bands between the two foils or laminating the bands to the one side of one of the two foils being the top or the bottom foil constituting the first or the second foil. Furthermore, it is to be understood that the bands may be contacted with the reinforcing fabric, grid, mesh or scrim, or alternatively, when laminated to the top side or bottom side of the composite foil structure be prevented from being contacted with the fabric, grid, mesh or scrim. At any rate, independent of whether or not the bands are laminated to the top surface or bottom surface of the composite foil structure or interlayered in the sandwich structure, the bands should as discussed above, be positioned overlapping with the reinforcing fabric in order to provide a sufficient mechanical stability and strength of the composite membrane structure. In particular, in order to prevent that any weakening area be provided, the overlapping area between the fabric, grid, mesh or scrim and the bands must be provided.

A particular aspect of the present invention relates to the production of 'Keder' reinforced bands as 'Keder' strings are commonly used within the technical field of scaffold sheeting as the term is used in this context as a generic term covering any mechanical structure in which an enlarged part of the reinforcing bands of the membrane serves as a guiding and arresting body to be positioned in a slot of a supporting structure such as a structural element of a scaffold. Examples of 'Keder' strings are cords, cylindrical bodies, braided or twisted ropes, etc. The term flexible when used in the present context means bendable but not elastically stretchable. It is contemplated that the term 'Keder' as originally used within the sail production field is a generic term covering the relevant field of fixating a sail or a similar element in the present context a weather protection membrane by means of a large body part which is received within a guiding rail or similar receiving structure. The bands may alternatively be used for mechanical fixation for fasteners such as zipper-like fastening elements, burr fasteners or mechanical eyelets, etc. The bands serving as 'Keder' bands may themselves be provided as fabrics, grids, meshes or scrims provided with one or two foil layers or foil coatings be provided as single polymer foil layers, multilayers, or composite structures including an integral fabric, grid, mesh or scrim and per se produced in accordance with the technique described in applicant's above mentioned published international patent application or any other technique of providing a laminated and/or composite membrane structure.

According to a particular feature of the method of producing a membrane according to the present invention, the reinforcing bands to be laminated to the composite foil assembly may be perforated or provided with through-going apertures in which case the reinforcing bands are preferably sandwiched between the two foils for allowing the two foils to be mechanically bonded together through the perforations or apertures and thereby providing a mechanical sealing between the two outer foils, i.e. the first and the second foil.

In the present context, the term band is to be construed a generic term covering any narrow band as compared to the width of the foils in question which band may be made from a high strength and preferably low frictional material of polymer base such as the materials used for the first and second foil and optionally provided with a frictional surface coating such as a PTFE fluorpolymer coating or similar coating or having interlayered fibres of woven threads of low frictional material such as the above mentioned PTFE fibres. Examples of relevant materials to be used for the bands are: bands being made from PE, preferably HDPE, PP, preferably isotactic polypropylene homopolymer; TPO; POP; Polybutylene (Poly(1-butene)); block copolymers; crosslinked polymers such as EPDM, SBR, EPR, PIB, PEX, PIP, polyisobutylene and TPU; Plasticized PVC ; Polyester, preferably Polyethylene, polyethylenterephthalat (PET) and blends or mixtures of any of the above, preferably having a bimodal molecular weight distribution, being block copolymers or combinations of block and copolymers, and/or including low frictional fibres.

The material PET is particularly preferred provided the bands be provided as non-reinforced single- or multilayer membranes, however, provided a reinforced structure including a fabric, grid, mesh or scrim be provided, PP, HDPE may advantageously be used. The bands may, as mentioned above, be constituted by single foils, reinforced or non-reinforced composite foil structures or alternatively be constituted by woven or non-woven PET, PP or PE fabrics.

The membrane preferably exhibits a tensile strength of the order of more than 600 N/50 mm width, preferably more than 1000 N/50 mm width, such as more than 1500 N/50 mm or even more than 2000 N/50 mm (measured according to EN 12311-1) also preferably exhibits a puncture resistance pr. thickness of more than 250 N/mm thickness, preferably more than 300 N/mm or even more than 350 N/mm (according to NT Build 336/1988-9 except with a 10 mm chisel).

The fabric, mesh, grid or scrim of the composite membrane may be made from any appropriate polymer fibre, filament, tape or wire material, e.g. the materials polypropylene, preferably isotactic polypropylene, polyethylene, preferably high density polyethylene, polyester or polyesters, preferably polyethylene terephtalene (PET), polyamide or polyamides, polyacrylonitrile or polyurethane or polyurethanes or a combination of the above materials. Additionally, fibres of carbon fibre, aramide fibres (Kevlar®), glass fibres etc. commonly used for reinforcing purposes within the plastics industry may be alternatively be used for the fabric, grid, mesh or scrim of the composite membrane.

The reinforcing fabric, grid, mesh or scrim has to exhibit specific properties as to strength, which properties are predominantly determined by the material of the reinforcing fabric, grid, mesh or scrim in question and the dimensions and size of the fabric, grid, mesh or scrim material. The reinforcing fabric, grid, mesh or scrim may be made from a polymer fibre, filament or wire material of a thickness of 0.1 - 1 mm, preferably 0.1 - 0.4 mm or of a thickness of 0.1 - 0.15 mm, 0.15 - 0.2 mm, 0.2 - 0.25 mm, 0.25 - 0.3 mm, 0.3 - 0.35 mm, 0.35 - 0.4 mm, 0.4 - 0.45 mm, 0.45 - 0.5 mm, 0.5 - 0.55 mm, 0.55 - 0.6 mm, 0.6 - 0.65 mm, 0.65 - 0.7 mm (if circular), and/or the reinforcing fabric, grid, mesh or scrim being made of polymer fibre, filament or wire material of a thickness of 300 - 4000 dtex (g/10.000 m), e.g. 1000 - 3000 dtex, preferably 1500 - 2500 dtex, or of a thickness of 300 - 400 dtex, 400 - 500 dtex, 500 - 600 dtex, 600 - 700 dtex, 700 - 800 dtex, 800 - 900 dtex, 900 - 1000 dtex, 1000 - 1250 dtex, 1250 - 1500 dtex, 1500 - 1750 dtex, 1750 - 2000 dtex, 2000 - 2500 dtex, 2500 - 3000 dtex, 3000 -3500 dtex or 3500 - 4000 dtex.

Apart from the dimensions of the fabric, grid, mesh or scrim providing the reinforcing of the membrane, the fabric, grid, mesh or scrim itself has to define a fabric, grid, mesh or scrim structure of an appropriate configuration and size and according to presently preferred and advantageous embodiments of the membrane, the mesh preferably and advantageously defines a mesh size of the order of 2 - 40 mm, such as 4 - 12 mm, preferably 3 - 10 mm, such as approximately 10 mm, or a mesh size of the order of 2 - 3 mm, 3 - 5 mm, 5 - 7 mm, 7 - 9 mm, 9 - 11 mm, 11 - 13 mm, 13 - 15 mm, 15 - 20 mm, 20 - 25 mm, 25 -30 mm, 30 - 35 mm or 35 - 40 mm.

A specific advantageous embodiment of the mesh is constituted by a mesh made from woven fabrics of e.g. PET multifilament yarn of a width of 2 - 3 mm woven in a tight linen weave including 14 tapes per inch.

For establishing an integral and stable membrane structure, the foils constituting the sandwiching structure have to establish a fairly large area of contact, as compared to the overall surface area of the membrane. Provided the area of contact between the two foils is extremely low, the foils will themselves be exposed to forces attempting to tear apart the two foils from one another causing a delamination of the membrane structure or alternatively the integrity and stability of the membrane structure is reduced or deteriorated. It has been realised, that the first and second foils in the sandwich structure should preferably provide an area of contact therebetween constituting more than 40%, such as 40 - 60%, preferably 60 - 70% of the overall surface area of the membrane.

The reinforcing fabric, grid, mesh or scrim interlayered between the two foils of the membrane structure may define any appropriate mesh or grid configuration or grid structure, preferably a square or rectangular configuration or any other polygonal or similar configuration. As an example, the reinforcing fabric, grid, mesh or scrim may alternatively define a rhombing configuration or a grid of any other geometrical configuration including triangular, elliptical, circular or any other geometrical configuration including linear or curved boundary lines including convex or concave configurations or any combination of the above geometrical configurations. Further, it is to be realised that the fabric, grid, mesh or scrim itself may be woven or simply composed of laid strands of polymer fibre, filament or wire material.

The lubricant material allowing the reinforcing fabric, grid, mesh or scrim to be moveable relative to the first and second sandwiching foils may be a lubricant oil or wax, a mineral lubricant oil or wax or a synthetic lubricant oil or wax, such as an oil or wax having a melting point above approximately 30° - 50°C, or an oil or wax originally dispersed in water or another solvent which is evaporated in the process of producing the membrane.

The lubricant material may be present in the integral sandwich structure as the surface coating of the fibre or wire material of the reinforcing fabric, grid, mesh or scrim. As the lubricant material being a wax or oil material, e.g. as described above, is present in the integral structure, the lubricant material may only be defined in terms of the amount present within the integral structure rather than as a dimensional surface coating thicknesses. The lubricant material is present in amount of 10-40% by weight of the weight of the reinforcing fabric, grid, mesh or scrim, such as 15-30% by weight, preferably 20-25% by weight, or alternatively 10-20%, 20-30% or 30-40% by weight.

Provided the reinforcing fabric, grid, mesh or scrim is made from e.g. multifilament fibres, the amount of lubricant material present within the integral membrane structure is somewhat higher than the amount present within a comparable membrane structure in which solid monofilament fibres be used for the reinforcing fabric, grid, mesh or scrim, as the multifilament structure exhibits an increased total surface area as compared to the surface area of the monofilament structure. Similarly, provided the fabric, grid, mesh or scrim be made from woven or non-woven laid materials, the amount of lubricant material is of course higher than the amount of lubricant used for a monofilament fibre fabric, grid, mesh or scrim structure.

The foil materials of the two foils of the membrane may be selected from any appropriate polymer or other relevant foil material being a compound material normally and preferably including specific additions for the provision of specific properties, such as UV stabilisers, antioxidants, anti ozonants, light stabilisers, flame retardants, pigments, nucleants, impact modifiers, plastizicers, heat stabilisers providing the relevant and adequate characteristics and features complying with the characteristics and features in questions. Provided the membrane is a water and gas impermeable membrane, the materials chosen for the two foil materials of course have to comply with this requirement. Alternatively, provided the membrane has e.g. to provide gas permeability and water impermeability, the materials selected for the two foils have correspondingly to comply with these requirements. In the present technical field, a multiplicity of materials are relevant, however especially polymer materials, such as flexible thermoplastics, i.e. polymers with low or medium crystallinity, and glass transition temperature below the lowest relevant application temperature are relevant. Also, copolymers, both random polymers and block copolymers, and blends of polymers can be applied. Crosslinkable polymers, which are crosslinked after manufacturing of the foils, can also be used. Generally, polyolefins are preferred.

Particularly preferred materials include: polyethylene (PE), especially low-density polyethylene (LDPE), medium density polyethylene (MDPE, up to about 0,945 g/cm3 density); random copolymers of ethylene and an alpha-olefine (known as linear low density polyethylenes, LLDPE; or very low density polyethylenes, VLDPE's, alternatively termed plastomers; ethylene and vinylacetate (EVA); ethylene and butylacrylate (EBA); ethylene and methylacrylate (EMA); ethylene and acrylic acid (EAA); polypropylene (PP) material, especially isotactic polypropylene homopolymer, random copolymers of propylene and ethylene (alternatively termed raco-PP); copolymers of propylene, ethylene and optionally higher alpha-olefins such as heterophasic block polymers, thermoplastic polyolefins (TPO's) and polyolefine plastomers (POP's); Polybutylene (Poly(1-butene)); block copolymers; thermoplastic elastomers such as ethylene propylene diene terpolymer (EPDM), styrene-butadiene copolymer (SBR), ethylene propylene rubber (EPR), polyisobutadiene (PIB), crosslinkable polyethylene (XLPE) such as vinylsilane ethylene copolymers, polyisoprene (PIP), polyisobutylene and thermoplastic polyurethanes (TPU's); Plasticized polyvinylchloride (PVC) ); and blends or mixtures of any of the above.

It is to be realised that the polymers applicable for use in the foil material within the scope of the present invention, may in general be subdivided into 2 types: A) flexible thermoplastics, capable of large plastic deformations, such as PE, and B) elastomers or rubbers.

Flexible plastics made up of polymers like polyethylene and polypropylene are different from rigid plastics in that they don't resist deformation as well, but they tend not to break when deformed. Instead they make plastic deformation, making yielding. This deformation can be of several hundred percent, the major part being irreversible. Accordingly, flexible plastics are not as strong as rigid ones, but they have a higher toughness.

Although the above considerations pertaining to mechanical properties might apply in general for the types of polymers mentioned above, it is possible to alter the stress-strain behaviour of a plastic with so called plasticizers. For example, without plasticizisers, poly(vinyl chloride) (PVC) is a rigid plastic, but with addition of plasticizers PVC can be made very flexible.

Apart from tensile properties, other properties, like compressional properties or flexural properties might influence the choice of polymer for use in a foil material of the membrane according to the present invention.

Foil materials may include flexible thermoplastics, i.e. polymers with low or medium crystallinity, and glass transition temperature below the relevant application temperature. Also, copolymers, both random polymers and block copolymers, and blends of polymers can be applied. Crosslinked polymers can also be used. Generally, polyolefins are preferred.

Examples of foil materials include:
- polyethylene (PE) material, especially low-density polyethylene (LDPE), medium density polyethylene (MDPE, up to about 0,945 g/cm3 density), random copolymers of ethylene and an alpha-olefins (known as linear low density polyethylenes, LLDPE; or very low density polyethylenes, VLDPE's , and sometimes also termed plastomers like Exact from DEX PLASTOMERS or Engage from Dow Chemicals); ethylene and vinylacetate (EVA), ethylene and butylacrylate (EBA); ethylene and methylacrylate (EMA); ethylene and acrylic acid (EAA); and blends of the above mentioned polymers,
- polypropylene (PP) material, especially isotactic polypropylene homopolymer, random copolymers of propylene and ethylene (sometimes called raco-PP), copolymers of propylene, ethylene and optionally higher alpha-olefins such as heterophasic block polymers (e.g. Hifax and Astryn from Basell and Borsoft from Borealis), thermoplastic polyolefins (known as TPO's); polyolefine plastomers (known as POP's), e.g. EXACT from DEX PLASTOMERS or AFFINITY from DOW Chemicals; and mixtures thereof;
- Polybutylene (Poly(1-butene));
- block copolymers and optionally crosslinked polymers such as ethylene propylene diene terpolymer (EPDM), styrene-butadiene copolymer (SBR), ethylene propylene rubber (EPR), polyisobutadiene (PIB), crosslinkable polyethylene (PEX), with e.g. a vinyl silane comonomer, polyisoprene (PIP), polyisobutylene and thermoplastic polyurethanes (TPU's).
- Plasticized polyvinylchloride (PVC).

As described above some of the foil-polymers can optionally be cross-linked following the extrusion process, e.g. cross-linking of LDPE to form XLPE using gamma radiation or crosslinking of vinyl silane containing ethylene copolymers using water.

In addition it might be desirable to combine different individual foil-layers made from different polymer materials, thereby combining the desirable properties of each of the individual layers, e.g. their different colours, fire properties, IR-reflection properties, gas-barrier properties, wear-properties, etc. It is evident to a person skilled in the art that the number of possible combinations will be limited by the fact that in order to be functional any such combination will have to be made between foils, which indeed can be effectively laminated, even though this may off course be facilitated by the use of adhesion polymers in additional foil layers.

It should be evident that apart from the inherent properties of the foil materials, based on their chemical composition, also the thickness of the foil materials of choice will be determining their mechanical properties.

With the above in mind it will be evident that the materials for use in the foils and the bands of the membrane according to the present invention may be selected from any of the polymers, copolymers, elastomers, immiscible blends, composite materials or combinations thereof mentioned above.

The polymer material of the first foil may be identical to the polymer material of the second foil, however, according to an alternative embodiment, the polymer materials of the first and the second foils are different from one another. Provided one of the same foil materials be chosen for the two foils and/or the two bands, the process of contacting and laminating the two foils together is of course easily established, due to the compatibility of the two foils being of the same material, whereas provided different materials be chosen for the two foils, certain precautions may necessitate that one or both foils be primed or otherwise treated for allowing the two foils to be contacted and sealed together. The sealing or lamination should be effective, to form a durable or long term stable structure, not only under static conditions; but also dynamic conditions, such as conditions prevailing in a roof structure under various wind loading.

Apart from single layer foil materials, multilayer foil materials may be used for one or both foils of the membrane or the band, or alternatively, for making a special surface layer, such as highly UV-stabilised or flame retardant layer, which may be utilised in connection with the membrane. Consequently, the one foil or both foils of the membrane may be treated for providing flame retardant properties or flame resistant properties as it is per se well known in the art. The materials used for providing these properties may be based on well known chemical systems such as brominated organic compositions or compounds optionally combined with antimony trioxide or similar chlorinated organic compositions, in particular chlorinated paraffins in combination with antimony trioxide. The flame retardant properties may alternatively be provided by the combination of the foil material or foil materials with halogen free flame retardants based on organic phosphate esters, e.g. triphenyl phosphate, tricresyl phosphate or resorcinol bis (disphenylphosphate), phosphonic acid (dimethylester), aluminium trihydroxide, red phosphorus, magnesium hydroxide, ammonium polyphosphate, zinc borate and similar compounds conventionally used in so called flame retardant foil structures.

Recent developments within the technique of providing flame retardant or flame resistant polymer materials have produced systems based on organic hindered amine light stabilisers, so called HALS compounds, commercially available from the company Ciba under the trade name NOR, a commercially available flame retardant and UV stabilising composition is the product Flamstab NOR ™ 116 being a monomeric N-alkoxy hindered amine (NOR HAS). The flame retardant or flame resistant properties are further contemplated to be obtainable through the use of expanded graphite systems.

In the present context, the terms 'flame safe', 'flame retardant', 'flame resistants' etc. are used synonymously covering the properties covered by numerous national and international standards for flame retardant tests such as the DIN 4102 (German standard), the NF P 92501-7 (European test), the MVSS 302, the NFPA 701 - 1989/1999 (US tests), the UL 94 V (US test) and LPS 1207, LPS 1215 (Great Britain de facto industrial standard) and pr EN 13823 pr EN ISO 11925-2.

One or both foils of the reinforced membrane may be provided with a coating of a metallic or alternatively a non-metallic compound providing a specific radiation opaqueness or radio transmission characteristic, such as a specific IR transmission/reflection spectrum, e.g. an IR reflection spectrum corresponding to the IR reflection spectrum of soil.

Alternatively or additionally, the first and/or second foils may be light reflecting or alternatively light transmitting or at least partly translucent or alternatively pigmented for providing a specific light transmission colouring or transparency.

As is discussed above, the polymer material of the first foil and or the second foil may advantageously be provided through extrusion of the polymer material in question at a specific extrusion temperature, such as an extrusion temperature within the range 150°C - 270°C, such as 220°C - 230°C, and be applied in the extrusion coating processor or lamination process to the other foil for providing the sandwich structure in which the reinforcing fabric, mesh, grid or scrim is embedded.

Alternatively, the polymer material of the first and/or the second foil may be made through heating the polymer material or materials in question, as the heating may be carried out at a heating temperature providing a softening point above 100°C and preferably a melting point above 100°C.

As will be described in greater details below, the two foils of the composite membrane according to the present invention may be produced through any appropriate per se well-known techniques, such as hot melt application, hot melt powder application, or preferably extrusion coating.

For complying with the physical and mechanical requirements as to strength, toughness and durability, the membrane has to fulfil certain requirements as discussed above as to tensile strength, and the membrane preferably provides a tensile strength of the order of no less than 600 N/50 mm width, such as 800 - 2000 N/50 mm width, preferably at least 800 N/50 mm for e.g. wall covering and at least 1500 N/50 mm for e.g. temporary roof covering.

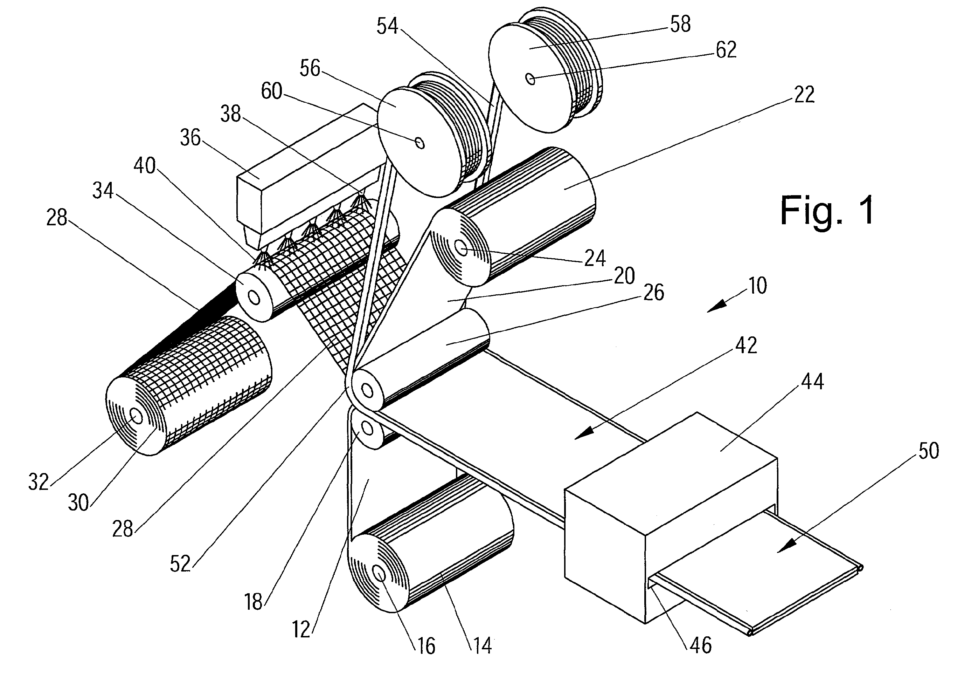

The invention is now to be further described with reference to the drawings, in which Fig. 1 is an overall perspective and schematic view illustrating a first embodiment of a method of producing, in accordance with the teachings of the present invention, a membrane including two edgewise positioned reinforcing bands,
Fig. 2 is a view similar to the view of Fig. 1 of a second embodiment of the method according to the present invention of producing a membrane including two reinforcing bands,
Fig. 3 is a view similar to the view of Fig. 2 of a third embodiment of the method according to the present invention of producing a membrane including two reinforcing bands,
Fig. 4 is a view similar to the view of Fig. 3 of a fourth embodiment of the method according to the present invention of producing a membrane including two reinforcing bands,
Figs. 5 is a view similar to the view of Fig. 4 of a fifth embodiment of the method according to the present invention of producing a membrane including two reinforcing bands,
Fig. 6 is a view similar to the view of Fig. 5 of a sixth embodiment of the method according to the present invention of producing a membrane including two reinforcing bands,
Fig. 7 is an overall perspective and schematic view illustrating an alternative technique of producing, in accordance with the teachings of the present invention, a membrane including two 'Keder' bands positioned edgewise along the membrane,
Fig. 8 is a perspective and schematic view illustrating a step of cutting or separating the membrane into separate membrane segments,
Figs. 9, 10 and 11 are perspective, schematic and sectional views illustrating alternative techniques of using the membrane according to the present invention as a scaffold membrane,
Figs. 12a-14b are schematic and sectional views illustrating alternative techniques of producing a 'Keder' string of the membrane in accordance with the teachings of the present invention,
Figs. 15a-15d are perspective and schematic views illustrating details of alternative applications of the reinforcing bands of the membrane according to the teachings of the present invention allowing different fixation application and allowing folding of the membrane,
Figs. 16a-16e are schematic and partly sectional views illustrating various techniques of fixating a 'Keder' string relative to the composite foil assembly and/or different reinforcing structures positioned edgewise along the composite foil assembly.

In Fig. 1, a process line is shown designated the reference numeral 10 in its entirety for carrying out a method according to the present invention of producing a membrane according to the present invention. In Fig. 1, the reference numerals 12 and 20 designate two plastic foils from which the composite or reinforced membrane is produced. The foils 12 and 20 constitute a bottom and top layer, respectively, of the final membrane and are delivered from two rolls 14 and 22, respectively. The rolls 14 and 22 are journalled on two axles 16 and 24, respectively. The two foils 12 and 20 are joint together by means of two pressure rollers 18 and 26, optionally constituted by heated rollers (heat embossing technique) for contacting the two foils 12 and 20 to one another. From a fabric, grid, mesh or scrim supply or roll 30, a fabric, mesh, grid or scrim 28 is delivered. The roll 30 is journalled on an axle 32 and the fabric, mesh, grid or scrim 28 is passed round a supporting roller 34 for allowing a lubricating oil or wax to be sprayed on to the fibres of the fabric, grid, mesh or scrim 28. The lubricating oil or wax is designated the reference numeral 40 and is delivered from dies 38 from a container 36, preferably a heated container, in which the lubricating oil or wax is contained.

It is to be realised that the technique of applying the lubrication oil or wax to the mesh or grid 28 is optional as according to the technique of producing a membrane according to the present invention may comprise the technique of applying the lubricating oil or wax or may be implemented without applying the lubricating oil or wax. In the alternative embodiment of the process line in which no lubrication oil or wax be used, the elements 36, 38 and 40 are consequently omitted.

From two 'Keder' band supply rolls 56 and 58, two 'Keder' bands 52 and 54, respectively, are delivered to the two pressure rollers 18 and 26. The rolls 56 and 58 are journalled on axles 60 and 62, respectively. The two 'Keder' bands 52 and 56 are edgewise sandwiched between the two foils 12 and 20 and are like the grid or mesh 28 laminated to the foils 12 and 20 by means of the rollers 18 and 26 for providing an integral structure in which the mesh 28 is laminated between the two foils 12 and 20 and likewise the bands 52 and 54 are laminated between the foils 12 and 20.

The foils 12 and 20 may be constituted by any appropriate, preferably weather resistant plastics material, such as a PE, preferably LDPE or MDPE; LLDPE; VLDPE, alternatively termed plastomers; EVA; EBA; EMA; EAA; PP, preferably isotactic polypropylene homopolymer; random copolymers of propylene and ethylene, alternatively termed raco-PP; copolymers of propylene, ethylene and optionally higher alpha-olefins such as heterophasic block polymers, TPO; Polybutylene (Poly(1-butene)); block copolymers; crosslinked polymers such as EPDM, SBR, EPR, PIB, PEX, PIP, polyisobutylene and TPU; Plasticized PVC ; and blends or mixtures of any of the above, optionally having a bimodal molecular weight distribution, being block copolymers or combinations of block and copolymers.

The fibres of the mesh or grid 28 may be constituted by any relevant fibre, filament or wire material which is compatible with the foil materials of the foils 12 and 20 and which are further compatible with the lubricating oil or wax 40. Examples of relevant materials are polypropylene, preferably isotactic polypropylene, polyethylene, preferably high density polyethylene, polyester or polyesters, preferably PET, polyamide or polyamides, polyacrylonitrile or polyurethane or polyurethanes, glass fibres or a combination of the above materials.

The reinforcing fabric, grid, mesh or scrim may be made from polymer fibre, filament or wire material of a thickness of 0.1 - 1 mm, preferably 0.1 - 0.4 mm or of a thickness of 0.1 - 0.15 mm, 0.15 - 0.2 mm, 0.2 - 0.25 mm, 0.25 - 0.3 mm, 0.3 - 0.35 mm, 0.35 - 0.4 mm, 0.4 - 0.45 mm, 0.45 - 0.5 mm, 0.5 - 0.55 mm, 0.55 - 0.6 mm, 0.6 - 0.65 mm, 0.65 - 0.7 mm, 0.7 - 0.75 mm, 0.75 - 0.8 mm, 0.8 - 0.85 mm, 0.85 - 0.9 mm, 0.9 - 0.95 mm, 0.95 - 1 mm, and/or the reinforcing fabric, grid, mesh or scrim being made of polymer fibre, filament or wire material of a thickness of 300 - 4000 dtex (g/10.000m), e.g. 1000 - 3000 dtex, preferably 1000 - 2500 dtex, or of a thickness of 300 - 600 dtex, 600 - 700 dtex, 700 - 800 dtex, 800 - 900 dtex, 900 - 1000 dtex, 1000 - 1250 dtex, 1250 - 1500 dtex, 1500 - 1750 dtex, 1750 - 2000 dtex, 2000 - 2500 dtex, 2500 - 3000 dtex, 3000 -3500 dtex or 3500 - 4000 dtex.

The grid or mesh 28 may advantageously define a square or alternatively a rectangular mesh configuration defining a mesh size of the order of 2 - 40 mm, such as 4 - 12 mm, preferably 3 - 10 mm, such as approximately 10 mm, or a mesh size of the order of 2 - 3 mm, 3 - 5 mm, 5 - 7 mm, 7 - 9 mm, 9 - 11 mm, 11 - 13 mm, 13 - 15 mm, 15 - 20 mm, 20 - 25 mm, 25 -30 mm, 30 - 35 mm or 35 - 40 mm.

The 'Keder' bands 52 and 54 may be made from any appropriate plastics material, preferably weather resistant plastics materials such as the above mentioned plastics materials, preferably a low frictional plastics material or a plastics material in which a surface coating of a low frictional material coating is provided or in which low frictional fibres or fabric be included.

The 'Keder' bands 52 and 54 include, as will be well known in the art and as will be described in greater details below each a reinforcing string of a mechanically flexible polymer material such as a string of PVC or any other appropriate flexible elastomer or polymer material or a rope of nylon. Additional examples of relevant 'Keder' string materials are mentioned above in relation to the materials of the reinforcing fabric, grid, mesh or scrim. After the joining of the two plastics foils 12 and 14 together sandwiching the fabric, mesh, grid or scrim 28 and joining the 'Keder' bands 52 and 54 to the foil 20, a composite sandwich 42 is produced which is input to a heating oven 44 in which the plastic materials of the foils 12 and 40 are softened for causing the two foils 12 and 20 to adhere to one another and for causing the 'Keder' bands 52 and 54 to be integrally joined to the foil 20. The resulting or final product is output from an output aperture 46 of the oven 44 and is shown in the right hand part of Fig. 1 and is designated the reference numeral 50.

As far as the structure of the final membrane 50 is concerned, reference is made to applicant's published international patent application, application number PCT/DK02/00187, publication number WO 02/075071.

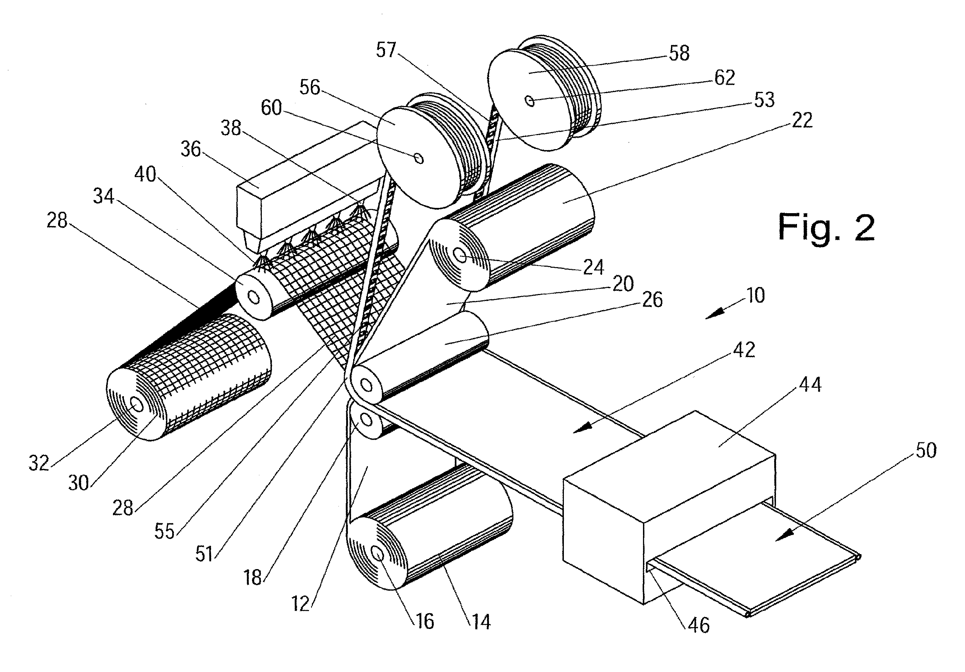

In Fig. 2, the same process line 10 as illustrated in Fig. 1 is shown for sandwiching and laminating differently configurated pair of 'Keder' bands 51 and 53 relative to the sandwiching foils 12 and 20. Whereas the 'Keder' bands 52 and 54 shown in Fig. 1 were continuous bands having the 'Keder' strings encapsulated within the band constituting a continuous band, the 'Keder' bands 51 and 53 are provided with apertures or perforations. One aperture or perforation of the 'Keder' band 51 is designated the reference numeral 55 and similarly, one aperture or perforation of the 'Keder' band 53 is designated the reference numeral 57. The apertures or perforations 55 and 57 serve the purpose of allowing the materials of the sandwiching foils 12 and 20 to be laminated together for establishing a bond between the two foils 12 and 20 through the apertures or perforations of the 'Keder' bands 51 and 53 apart from the integral joint between the materials of the foils 12 and 20 and the material of the sandwiched 'Keder' bands 51 and 53 in question. The apertures or perforations of the 'Keder' bands 51 and 53 are preferably rectangular, or of a square configuration or alternatively of a triangular or circular, elliptical or any other configuration. Provided the apertures or perforations are of a rectangular or square configuration, the apertures may have a length of 10 - 50 mm and a width of 10-30 mm.

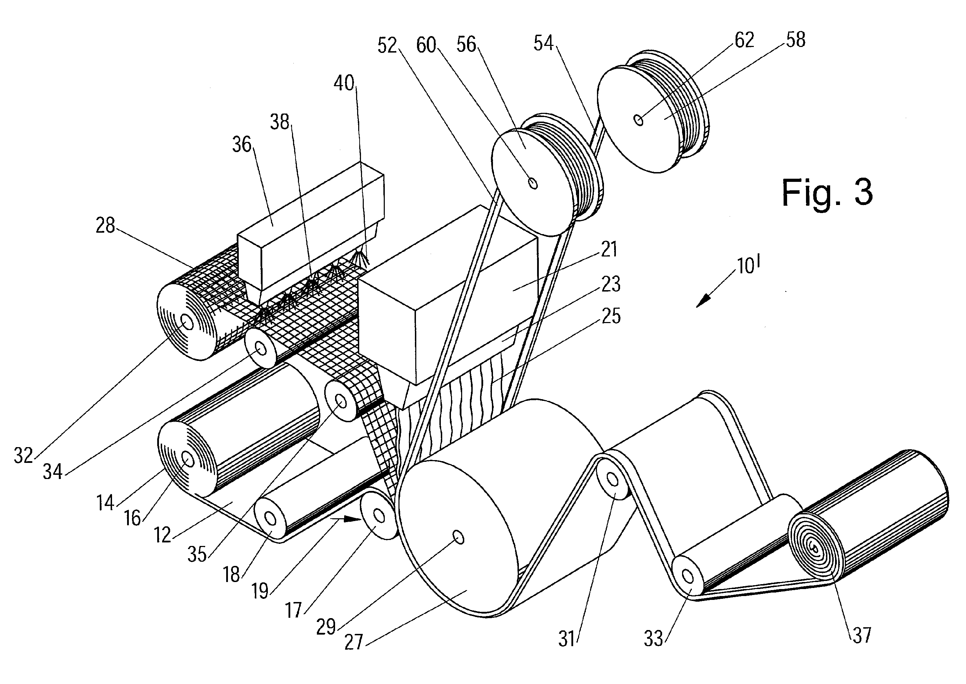

In Fig. 3, an alternative embodiment of a process line for producing the membrane according to the present invention is shown designated the reference numeral 10' in its entirety. In the below description, components or elements which have been described previously and are designated in the previous description a specific reference numeral, are in the description designated the same reference numeral as previously used and are only discussed or described in the context necessitated by the description itself. Components or elements differing from components or elements, respectively, described previously, still fulfilling the same purpose as a component or element previously described, is designated the same reference integer, however added a marking for identifying the difference to the previously described component or element.

The process line outlined in Fig. 3 basically differs from the above described process line 10 shown in Fig. 1 in that the softening oven 44 is omitted and the prefabricated foil 20 is substituted by a foil 25 which is readily extruded from an extruder 21 prior to the step of contacting the foil with the reinforcing grid or mesh 28, the 'Keder' bands 52 and 54 and the bottom foil 12 and which may be considered constituting a molden foil. In Fig. 3, an extruder 21 is shown including an extrusion die 23 from which the extruded foil 25 is delivered. The 'Keder' bands 52 and 54 are further in Fig. 3 guided into contact with the top surface of the foil 25 constituting a molten foil and are, consequently, laminated to the top surface of the foil 25 rather than laminated between the two sandwiching foils as shown in Fig. 1. The foil 25 is, along with the reinforcing grid or mesh 28 and having the 'Keder' bands 52 and 54 positioned in contact with the top surface of the foil 25 and the bottom foil 12 input to a small gap between a pressure roller 17 which is pressed in the direction indicated by an arrow 19 into contact with a large diameter cooling roller 27 which is journalled on an axle 29. In Fig. 3, the grid or mesh 28 is passed round an additional roller 35 prior to introducing the grid or mesh into the gap between the prefabricated bottom foil 12 and the readily extruded foil 25. Similar to the process line described above with reference to Fig. 1, the elements 36, 38 and 40 for providing the lubrication of the mesh or grid 28 may be omitted.

In Fig. 3, the heating oven 44 is omitted and the final product delivered from the large diameter cooling roll 27 is passed round two rollers 31 and 33 before the finalised and cooled off membrane 50 is collected on a roll 37.

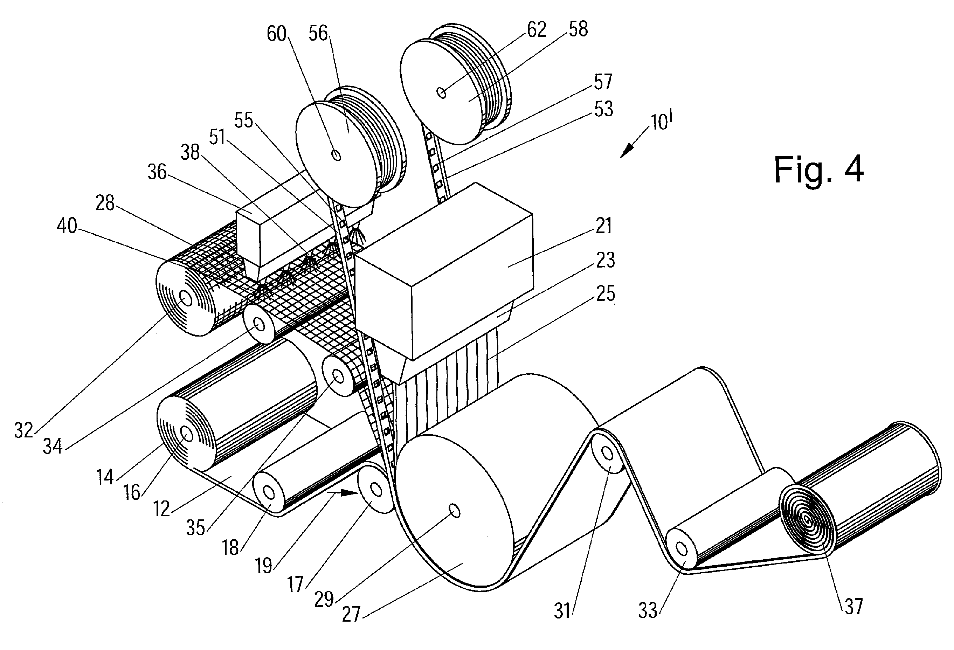

In Fig. 4, the process line 10' also shown in fig. 3 is illustrated for performing the alternative technique of sandwiching and laminating the perforated 'Keder' bands 51 and 53 also shown in Fig. 2 between the sandwiching foils 12 and 25 also shown in Fig. 3.

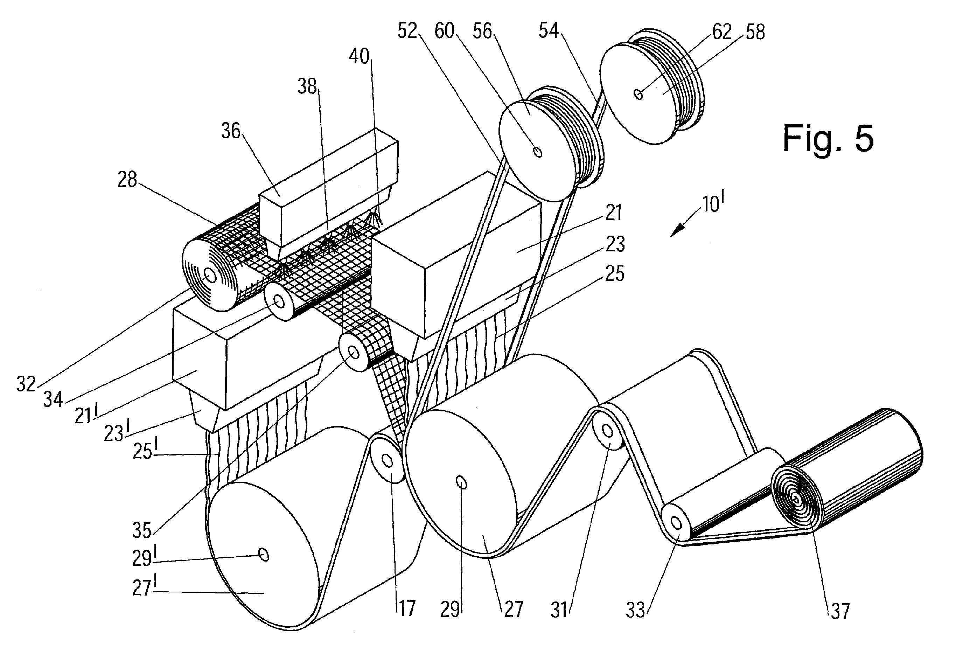

In Fig. 5, a further alternative embodiment of a process line for producing the membrane according to the present invention is shown, designated the reference numeral 10" in its entirety. The process line outlined in Fig. 5 basically differs from the process line or process line 10' shown in Fig. 3 in that the bottom foil 12 is produced online by means of a further extruder 21' including an extrusion die 23' from which the extruded foil 25' is delivered. The extruded and softened foil 25' is passed round a cooling roller 27' which is journalled on an axle 29' from the cooling roller 27', a soft, yet partly solidified foil constituting the bottom foil 12 is delivered to the gap between the pressure roller 17 and the large diameter cooling roller 27, also shown in Fig. 3.

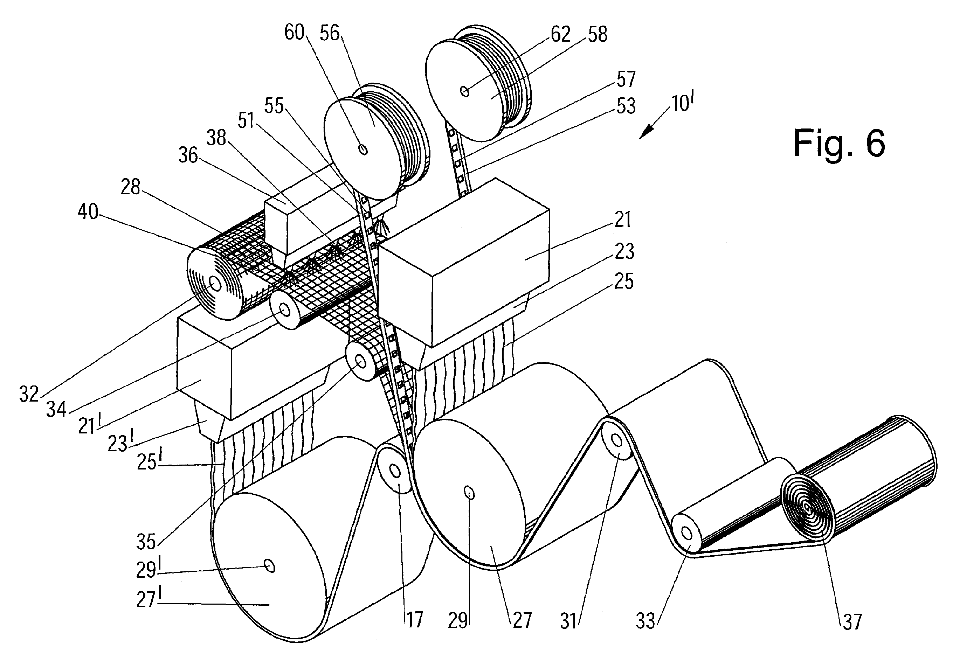

In Fig. 6, the process line 10" is modified like the process line 10 is modified in Fig. 2 and the process line 10' is modified in Fig. 4 relative to the technique shown in Figs. 1 and 3, respectively, for laminating the perforated 'Keder' bands 51 and 53 between the two foils 25 and 25'.

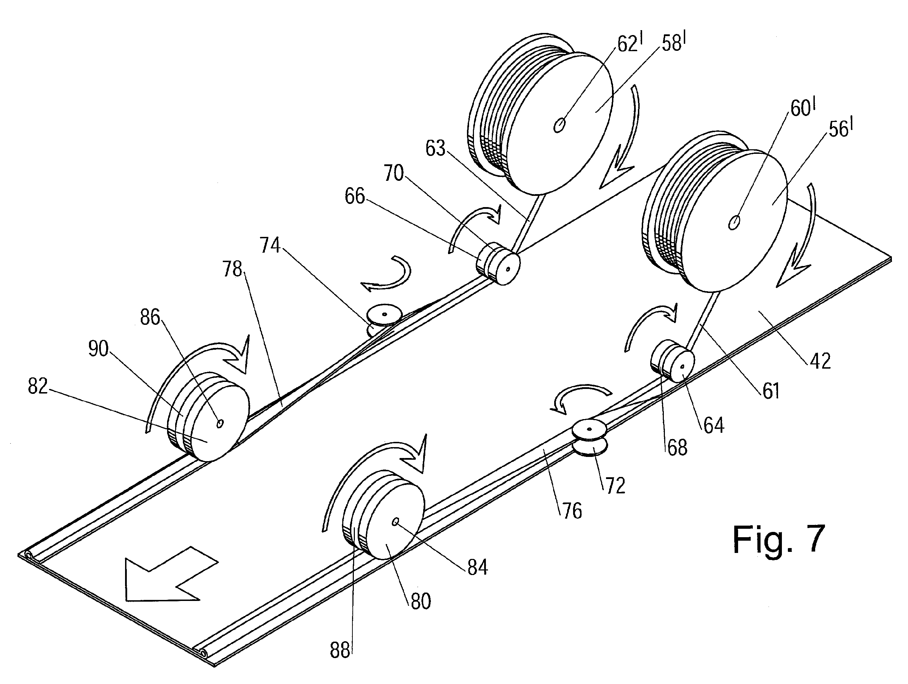

In Fig. 7, an alternative technique is shown of producing the membrane including the 'Keder' bands laminated to the basic membrane in the process of producing the laminated basic membrane or after the lamination process. In Fig. 7, the basic membrane 42 is shown after the application of the two sandwiching foil layers 12 and 20 together as described above with reference to Figs. 1-6 and also in applicant's above mentioned published international patent application. After the lamination of the two foil layers 12 and 42 together, two strings or ropes of flexible polymer material are applied edgewise to the foil assembly as two strings 61 and 63 are delivered from two string supplies or rolls 56' and 58' which are journalled on axles 60' and 62', respectively. The strings 61 and 63 are preferably nylon strings or similar flexible material. The strings are properly positioned along the edges of the foil assembly 42 by means of two rollers 64 and 66, respectively, having central recesses 68 and 70 serving the purpose of guiding the strings 61 and 63, respectively, into the intentional position offset inwardly relative to the outer edges of the foil assembly 42. In an alternative or further embodiment of the process line shown in Fig. 7, additional rollers constituting counter rollers may be provided below the rollers 64 and 66, and further below the rollers 80 and 82 for mechanically supporting the strings 61 and 63.

After the positioning of the strings 61 and 63 along the edges of the foil assembly 42, two separator wheels 72 and 74 serve the purpose of separating an edge part of the top foil of the foil assembly from the lower or bottom foil and at the same time turn over the foil flap backwards onto the top surface of the foil assembly 42 for encasing the strings 61 and 63 within the material of the turned over foil flap. The turned over foil flap produced by the separator wheel 72 serving the purpose of encasing the string 61 is designated the reference numeral 76 and similarly the turned over foil flap produced by means of the separator wheel is designated the reference numeral 78.

In a further step shown in the lower left hand part of Fig. 7, two major rollers 80 and 82 similar to the rollers 64 and 66, respectively, and journalled on axles 84 and 86, respectively, serve the purpose of pressing the turned over flaps 76 and 78, respectively, into facial contact with the top surface of the foil assembly 42 and at the same time maintaining the strings 61 and 63 respectively within the intentional position encased within the turned over flaps 76 and 78, respectively, by means of central recesses 88 and 90 similar to the recesses 68 and 70, respectively.

After the positioning of the turned over flaps 76 and 78 and the proper positions in facial contact with the top surface of the foil assembly 42, the final assembly having integrally included 'Keder' strings produced by the flexible polymer strings 61 and 63, 76 and 78, respectively, is moved to the heating oven 44 for heating the laminated assembly.

The process line shown in Fig. 7 may further be modified by the addition of supplementary components such as heat blowers positioned between the separator wheels 72 and 74 and the rollers 80 and 82, respectively, for applying heat to the gap between the turned over flaps 76 and 78 and the underlying foil material. Alternatively or additionally, adhesive or glue applicators may be used as an alternative to or in conjunction with the heat blowers for providing an extrusion adhesion of the turned over flap 76 and 78, a fusion or melting of the turned over flaps to the underlying foil material. Alternative or supplementary techniques including fusion, adhesive, powder, hot-melt adhesion, ultrasonic or high frequency welding may further be employed.

The overall orientation of transportation of the foil assembly 42 is indicated by a large arrow in the lower left hand part of the foil assembly 42, and the direction of rotation of the rollers and wheels 64, 66, 72, 74, 80 and 82 are indicated by individual arrows.

In an alternative and modified version of the method illustrated in Fig. 7, the remaining edge part of the lower foil of the foil assembly 42 is prior to or after the heating in the heating oven 44 cut off so as to produce the final product having the 'Keder' bands positioned at the outermost edges of the band. In a further alternative embodiment, the production step illustrated in Fig. 7 is performed as a separate step after the heating, in the heating oven 44, of the foil assembly produced according to the technique described in the applicant's above-identified published international patent application.

The technique of turning over an edge part of one of the two foils of the foil assembly 42 as described above with reference to Fig. 7 may obviously be modified and used as a separate production step in the production process line shown in Figs. 1-6 and consequently included in the process prior to the joining of the two foils 12 and 20 together by means of the rollers 18 and 26 as one of the two foils may be subjected to the process shown in Fig. 7 in which case the foil assembly 42 is simply substituted by the one foil being the foil 12 or alternatively the foil 20.

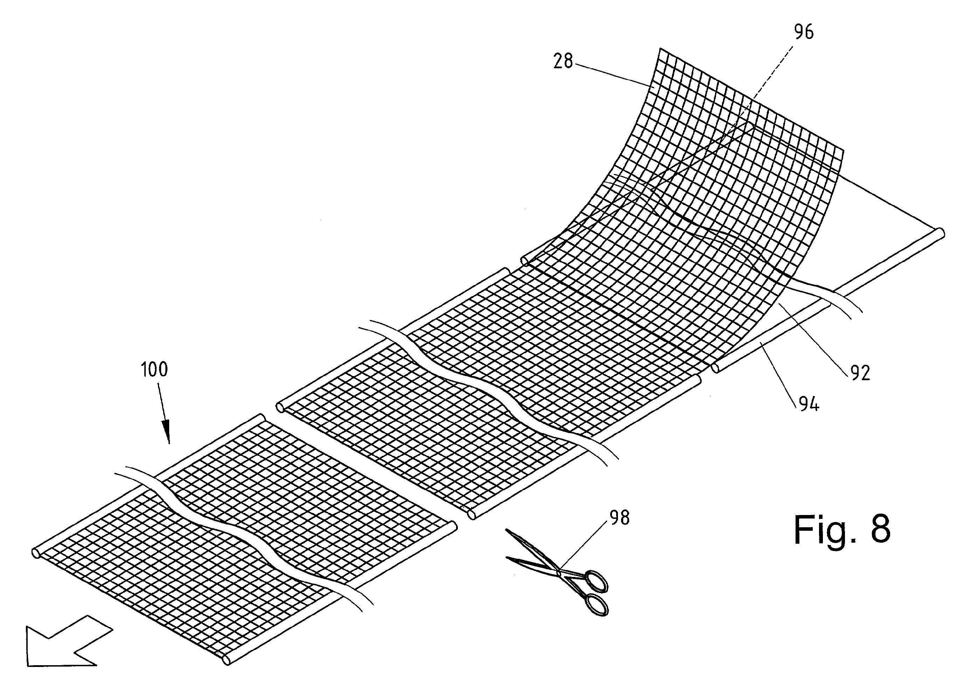

Provided the production step shown in Fig. 7 is performed on one of the foils 12 and 20 separate, the production technique may be further modified as illustrated in Fig. 8 as the foil having the integral 'Keder' bands, which foil is shown in Fig. 8 and designated the reference numeral 92 is then contacted with the reinforcing grid or mesh 28. The foil 92 includes, as is illustrated in Fig. 8, two edgewise positioned 'Keder' strings which are preferably produced according to the technique described in Fig. 7.

After the application of the reinforcing grid or mesh 28 onto the foil 92 and prior to the joining of a further top foil onto the top surface of the reinforcing grid or mesh 28, the assembly of the foil 92 and the reinforcing grid or mesh 28 is cut into separate sections as is indicated schematically by a scissor 98 for the production of separate assembly sections one of which is designated the reference numeral 100. The step of cutting the assembly of the foil 92 and the reinforcing grid or mesh 28 into separate sections 100 may obviously be carried out after the finalising of the assembly and heating process or after the lamination of a top foil on to the reinforcing grid or mesh 28.

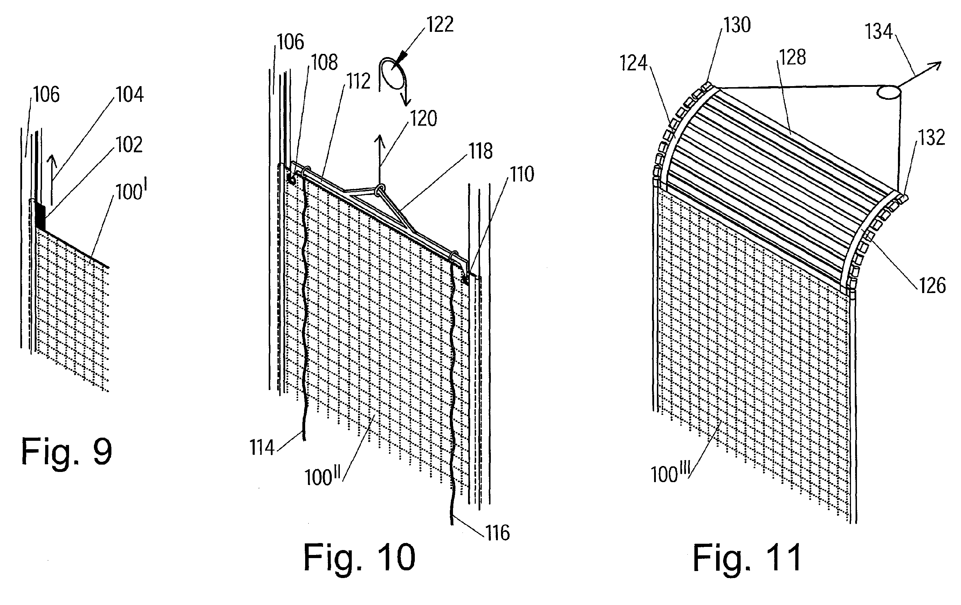

In Figs. 9, 10 and 11, alternative techniques are shown of mounting an edgewise reinforced membrane according to the present invention in a mechanical guided structure. In Fig. 9, a membrane section 100' is shown having a top extension flap 102 by means of which pull the membrane section 100' may be pulled in a direction of an arrow 104 when guided in a profiled bar 106.

Alternatively, as illustrated in Fig. 10, eyelets 108 and 110 may be provided at the uppermost end of the membrane section 100" for receiving a transversal bar 112 which may be pulled upwardly by means of two ropes 114 and 166 or by means of a yoke part 118 in the direction of an arrow 120. As is indicated schematically by the reference sign 122, the pulling of the membrane section 102 may be performed by means of a top turning bar or roll as is well known within the art per se.

In Fig. 11, a further alternative of the technique of pulling the membrane section 100'" is shown as the membrane section 100"' is provided with two extension straps 124 and 126 which are fixated to a plurality of transversal bars serving as guiding bars and having the profile of the membrane section 100'" i.e. the profile of a central elongated bar and two cylindrical end bodies. One of the guiding bars is designated the reference numeral 128 and the cylindrical end bodies are designated the reference numerals 130 and 132. The top guiding bar may additionally be provided with rollers, wheels or similar journalling elements for reducing the friction during pulling the membrane section 100. The membrane section 100'" may be guided into its intentional and proper position by pulling the membrane section including the guiding bars by means of a rope, chain or similar pulling appliance as is illustrated in the right hand part of Fig. 11 along the direction of an arrow 134.

In the above described membranes produced as illustrated in Figs. 1-8 and used e.g. as illustrated in Figs. 1-11, the 'Keder' string is contemplated to be a conventional circular cylindrical string. According to the teachings of the present invention, the 'Keder' band may, however, be produced from a different element such as a profiled polymer band or a band including a non-circular cylindrical body or string.

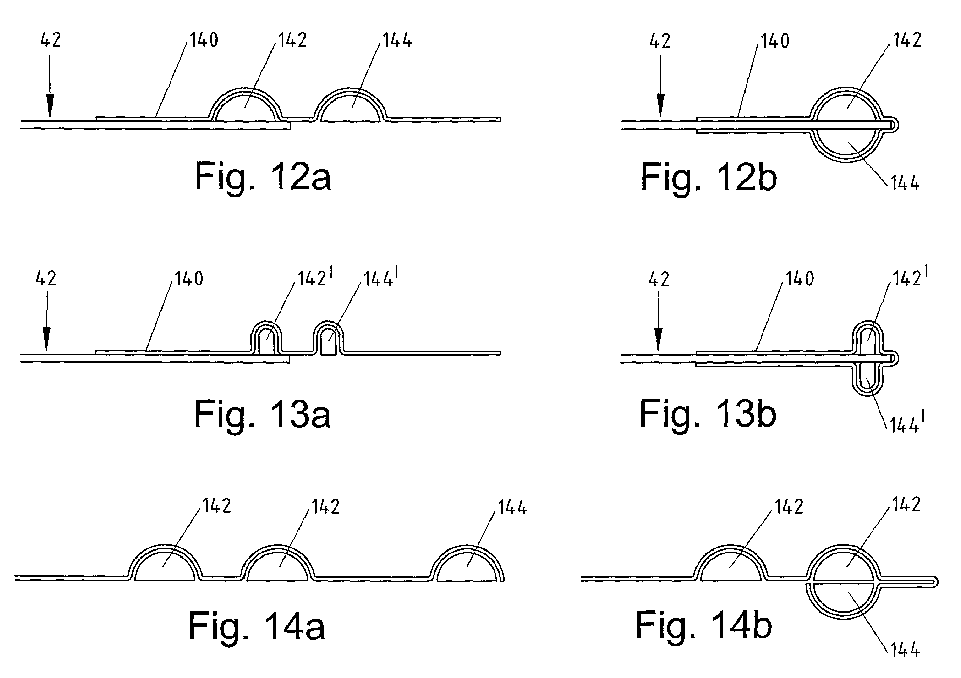

In Fig. 12a, the foil assembly 42 is shown and on the top surface of the foil assembly 42, a band 140 is applied, which band is preferably made of a low frictional polymer material such as a woven or non-woven polymer material or a polymer foil including low frictional fibres or provided with a low frictional surface coating. At the outer edge of the foil assembly 42, the band 140 encases a string or body of a semicircular cylindrical configuration which body is designated the reference numeral 142. The band 140 extends beyond the outer edge of the foil assembly 42 and encases a further semicircular cylindrical string or body 144 similar to the body 142.

As the band 140 is bent downwardly onto the lower surface of the foil assembly 42 as is shown in Fig. 12b, the two semicircular cylindrical strings or bodies 142 and 144 together define a circular cylindrical 'Keder' string enclosed within the band 140 and positioned at the outer edge of the foil assembly 42.

The technique illustrated in Figs. 12a and 12b may readily be employed in the process lines shown in Figs. 1-7 and used in integral lamination and heating technique as described above with reference to Figs. 1-6.

As an alternative to the circular cylindrical configuration of the string such as the string shown in Fig. 12b composed of the two semicircular cylindrical bodies 142 and 144, an elliptical or any otherwise configurated 'Keder' body may produce, e.g. as illustrated in Fig. 13a in which the band 140 encases two non-semicircular cylindrical bodies 142' and 144' together providing, as illustrated in Fig. 13b, a transversal 'Keder' string body composed of the two bodies or parts 142' and 144'. Differently configurated 'Keder' bodies such as triangular, elliptical, polygonal or bodies combined from the semicircular cylindrical, triangular, polygonal or otherwise configurated elements may be readily produced employing the folding technique described above with reference to Figs. 12a, 12b, 13a and 13b.

As a further alternative to the technique of producing the 'Keder' body by folding the band 140 round the outer edge of the foil assembly 42, an additional 'Keder' element may be produced as is illustrated in Figs. 14a and 14b in which embodiment two semicircular cylindrical bodies 142 are positioned on the top surface of the composite foil 42 not shown in Figs. 14a and 14b, the left hand semicircular cylindrical body 142 providing a semicircular cylindrical 'Keder' string whereas the right hand semicircular cylindrical body 142 together with the semicircular cylindrical body 144 generate the circular cylindrical 'Keder' string as shown in Fig. 12b.

The presence of the two semicircular bodies 142 makes it possible to modify the overall width of the composite membrane to the process of producing the membrane as the width of the composite membrane may be altered by contacting the semicircular cylindrical body 144 with the left-hand semicircular cylindrical body 142 and cutting off the outer free flap of the band 140.

The technique of continuous inline producing the edge reinforced membrane according to the teachings of the present invention may also be employed for producing differently configurated edge reinforcements such as providing an edge band 52"' to which a plurality of zipper bodies 146 may be fixated for generating a membrane according to the present invention having edgewise mounted zipper bodies for co-operating with similar fastening elements of the supporting structure to which the membrane is to be fixated. As a further alternative burr-like fixtures may be applied along the reinforcing band 52"' instead of the zipper bodies 146.

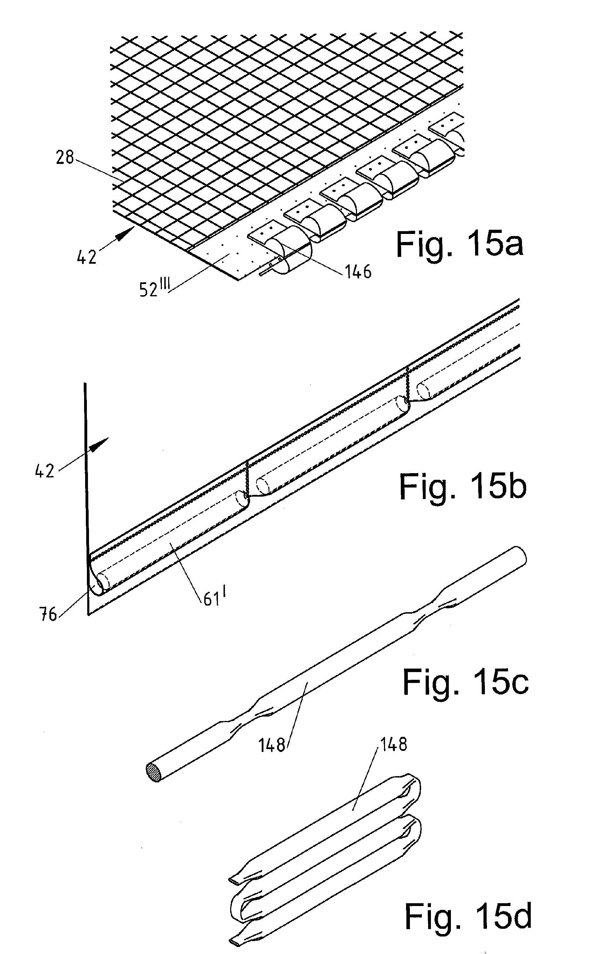

In Figs. 15b, 15c and 15d, a further modification of the 'Keder' string is illustrated as the 'Keder' string which in the above described embodiment has been described as a continuous string may be separated into minor segments such as a plurality of segments 61' shown in Fig. 15b which may be fixated within the turned over foil flap 76 or alternatively as illustrated in Fig. 15d be contained within the outer foil cover 148 allowing the 'Keder' string to be folded as is illustrated in Fig, 15d. Typical dimensions of the segmented 'Keder' string are: the diameter of the string being of the order 8 - 12 mm, the length of each segment being of the order of 20 - 50 cm, and the spacing between any two adjacent string segments being of the order of 10 - 25 mm.

The technique of laminating and fixating the 'Keder' bands edgewise to the foil assembly in the process of producing the composite reinforced membrane or in conjunction with the process of laminating and producing the foil assembly may as mentioned above be modified in numerous ways as will be evident to a person having ordinary skill in the art. In Fig. 16a a schematic view is shown illustrating a technique of fixating in the online production process shown in Figs. 1-6 of fixating a pre-cast 'keder' string enclosing band 150 to the foil assembly 42 which band encases the 'Keder' string 61^{IV}. In the pre-cast version shown in Fig. 16a, the 'Keder' string 61^{IV} may be lubricated with an oil or wax for allowing the string to be freely movable within the band encasing produced by the pre-cast foil 150.

In Fig. 16b, the pre-cast band structure is further modified for providing sandwiching of the foil assembly 42 as the pre-cast band 150 is positioned having two surface parts adhered or laminated to opposite sides of the foil assembly 42.

In Fig. 16c, the sandwiching technique illustrated in Fig. 16b is further modified by the provision of the 'Keder' band 150 as a profiled structure in which the string 61^{IV} is pre-encased within a circumferentially encircling end part of the band 150.

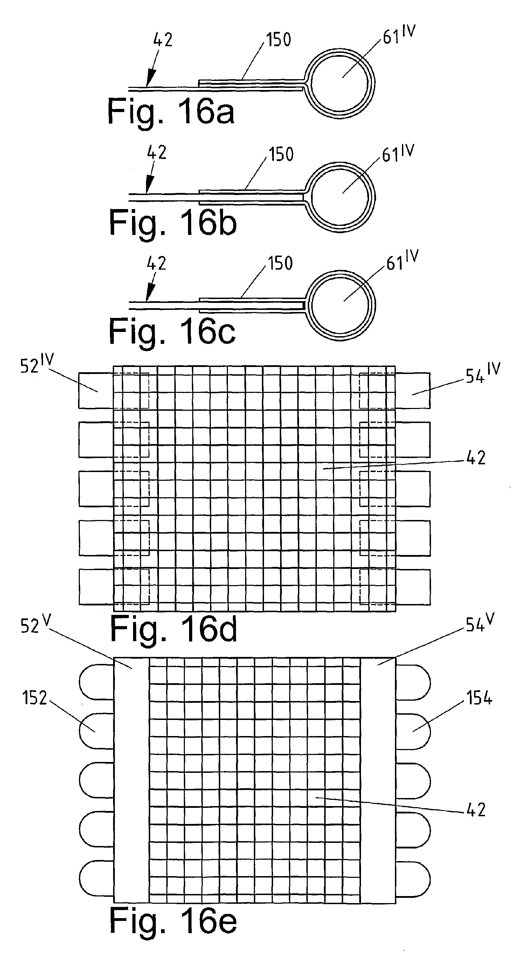

The general technique of inline producing edge reinforcement of the foil assembly produced according to the method according to the present invention and as illustrated in Figs. 1-6 allow the formation of continuous or, as is illustrated in Figs. 16d and 16e non-continuous edge reinforcing structures. In Fig. 16d segmented edge reinforcing bands 52^{IV} and 54^{IV} are laminated between the two foils 12 and 20 of the foil assembly 42 providing a mechanical bonding similar to the bonding obtained according to the technique described above with reference to Figs. 2, 4 and 6 between the two opposite foils 12 and 20. Alternatively, as illustrated in Fig. 16e, the reinforcing bands 52^{V} and 54^{V} may be used for supporting additonal flap elements extending outwardly from the reinforcing band 52^{V} and 54^{V} and designated the reference numerals 152 and 154, respectively. The elements 152 and 154 may constitute rigid or stiff flap elements or loops produced of woven filament ropes or any other mechanical fixture element which is welded or adhered in a lamination and/or heating process to the edge reinforcing bands 52^{V} and 54^{V}.

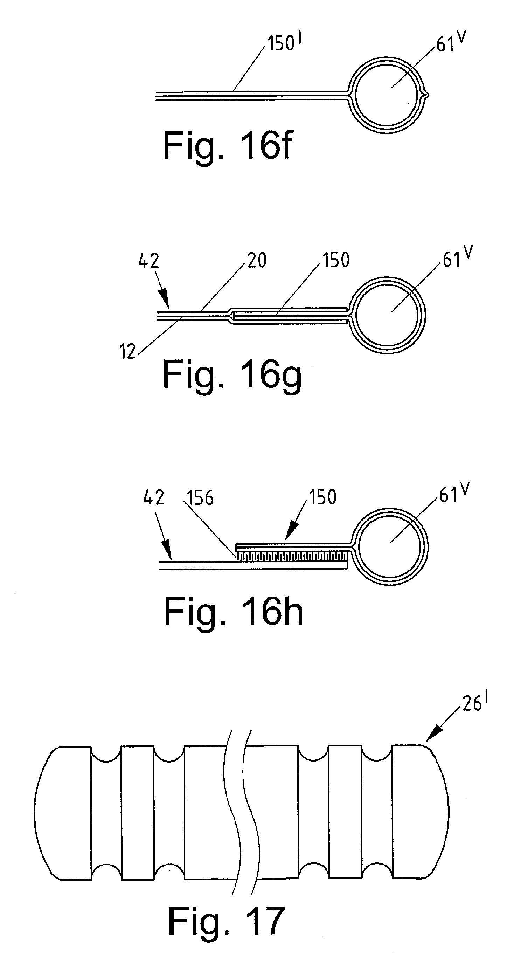

In Fig. 16f, a modified version of the pre-fabricated 'Keder' string encasing band 150 is shown designated the reference numeral 150' as the structure shown in Fig. 16f differs from the above described structure shown in Fig. 16a in that the encasing foil is provided with a weakening line extending longitudinal centrally within the band for controlling the folding of the band into the 'Keder' string encasing structure.

In Fig. 16g, the 'Keder' band 150 shown in Fig. 16 a is modified into the laminate structure produced according to the technique illustrated in Figs. 1, 3 or 5 as the band 150 is sandwiched between the two foils 12 and 20 of the foil assembly 42.

In Fig. 16h, a further alternative technique of fixating the 'Keder' band 150 relative to the foil assembly 42 is shown as the 'Keder' band 150 is fixated to the foil assembly 42 by means of co-operating burr fixtures 156.

In Fig. 17, a roller is shown schematically in which roller the function of laminating the foils 12 and 20 together and at the same time guiding the 'Keder' bands into their intentional edgewise position is shown, which roller is designated the reference numeral 26' and is to be understood as a schematic views exaggerating the outer peripheral recesses and clearly presenting a far too small width.

### EXAMPLE 1

By means of the process line shown in Fig. 3, a continuous composite membrane was made from the following components: The foil 12 was a 80 µm LDPE foil including flame retardents, the mesh 28 was a 8 x 8 mm mesh size PET mesh of 1670 dtex multifilament yarn, the top foil or coating layer 25 was a 120 µm LDPE foil including flame retardents. The 'Keder' band 52 and 54 were constituted by 200 mm width HDPE woven bands applied to the top surface of the coating layer or top foil 25. In an additional process step similar to the process illustrated in Fig. 7, the 200 mm HDPE woven bands were turned over and were adhered to the respective band enclosing a 8 mm plastisized PVC 'Keder' string.

The width of the composite membrane was 2,57 m and in the alternative variant, the width was 3,0 m.

### EXAMPLE 2

In an alternative embodiment, a pre-fabricated 'Keder' web made from woven PE fabric and including a 8,5 mm plastisized PVC string is laminated to the top foil or coating layer 25 in the process illustrated in Fig. 3 while employing the roller 26' shown in Fig. 17 and the foil 12, the mesh 28 and the top foil or coating layer 25 as specified in Example 1 above.

### EXAMPLE 3

In the process line shown in Fig. 4, the foil 12 is constituted by a 250 µm PE foil including frame retardants, the mesh 28 is the mesh of Example 1 above without lubrication and the top foil or coating layer 25 is a 250 µm PE foil.

The 'Keder' bands 52 and 54 are constituted by woven PE bands of a width of 100 mm having apertures measuring 20 x 25 mm. Like the above described Example 1, a 'Keder' string of plastisized PVC of a diameter of 8,5 mm is used.

Apart from the below claims, the following points are also relevant in defining the present invention:
Point 1. The method according to any of the below claims 1-15, said polymer material of said first and/or said second foil being PE, preferably LDPE or MDPE; LLDPE; VLDPE, alternatively termed plastomers; EVA; EBA; EMA; EAA; PP, preferably isotactic polypropylene homopolymer; random copolymers of propylene and ethylene, alternatively termed raco-PP; copolymers of propylene, ethylene and optionally higher alpha-olefins such as heterophasic block polymers, TPO; POP; Polybutylene (Poly(1-butene)); block copolymers; crosslinked polymers such as EPDM, SBR, EPR, PIB, PEX, PIP, polyisobutylene and TPU; Plasticized PVC ; and blends or mixtures of any of the above, preferably having a bimodal molecular weight distribution, being block copolymers or combinations of block and copolymers.
Point 2. The method according to point 1, said lubricant material being provided as a lubricant oil or wax, being a mineral lubricant oil or wax or a synthetic lubricant oil or wax, such as an oil or wax having a melting point above approximately 30° - 50° C, or an oil or a wax originally dispersed in water or another solvent.
Point 3. The method according to any of the points 1-2, said lubricant material being provided in an amount of 10-40% by weight of the weight of said reinforcing fabric, grid, mesh or scrim, such as 15-30% by weight, preferably 20-25% by weight, or alternatively 10-20%, 20-30% or 30-40% by weight.
Point 4. The method according to any of the points 1-3, said polymer material of said first foil being identical to said polymer material of said second foil or alternatively said polymer materials of said first and second foils being different from one another.
Point 5. The method according to any of the points 1-4, said polymer material of said first foil being of a thickness of 20 µm - 1000 µm, preferably 50 - 400 µm, more preferably 100 - 300 µm and said polymer material of said second foil being of a thickness of 20 µm - 1000 µm, preferably 50-400 µm, more preferably 100-300 µm.
Point 6. The method according to any of the points 1-5, said first foil and/or said second foil being made from a single or multilayer foil material provided with a coating of a metallic or non-metallic compound providing a specific radio opaqueness or radio transmission characteristic, such as a specific IR transmission/reflection spectrum, e.g. an IR reflection spectrum corresponding to the IR reflection spectrum of soil.
Point 7. The method according to any of the points 1-6, said first and second foils being light reflecting or alternatively light transmitting or at least partly translucent or alternatively pigmented for providing a specific light transmission colouring.

Although the present invention has above been described with reference to specific an presently preferred embodiments, the present invention is by no means to be construed limited to the above embodiments, rather is the invention to be understood as defined in the appending claims.

## Claims

1. A method of producing a membrane, in particular a weather protection membrane for use in the field of house building or construction, in particular for use as a scaffold membrane, the method comprising:
providing a reinforcing regularly laid, woven or non-woven fabric, grid, mesh or scrim comprising a dimensionally mechanical stable polymer fibre, filament or wire material, such as a homogeneous or non-homogeneous fibre material, e.g. a monofilament, a yarn, a tape, a split film, fibre or a multifilament based material, a woven, a braided, a non-woven or a combined woven and non-woven fibrous material,
providing a first foil of a polymer material, preferably a weather resistant polymer material of a single layer configuration or a multilayer configuration,
providing a second foil of polymer material, preferably a weather resistant polymer material of a single layer configuration or a multilayer configuration,
providing two bands of polymer material, preferably a weather resistant polymer material of a single layer configuration or a multilayer configuration including woven or non-woven layer or layers and exhibiting low frictional properties, and
interlaying and sandwiching said reinforcing fabric, grid, mesh or scrim between said first and second foils and positioning said bands edgewise at said first and second foils, and at least partly overlapping said reinforcing fabric, grid, mesh or scrim, and laminating said first and second foils together and to said bands for sandwiching foils within said sandwich structure and for providing an integral structure in which said bands are laminated integrally to one of said foils or both said foils, and at least partly overlapping said reinforcing fabric, grid, mesh or scrim.

2. The method according to claim 1, the method further comprising prior to the interlaying and sandwiching of the reinforcing fabric, grid, mesh or scrim between said first and second foils, the step of applying a lubricating material such as a lubricating oil or wax which is substantially non-aggressive to said polymer materials of said first and second foils and substantially non-dissolvable within said polymer materials of said first and second foils to at least a part of said fabric, grid, mesh or scrim for at least partly coating said fabric, grid, mesh or scrim with said lubricating material, and including in the step of interlaying and sandwiching said reinforcing fabric, grid, mesh or scrim provided with said lubricating material coating between said first and said second foils for allowing said lubricating material coated reinforcing fabric, grid, mesh or scrim to be movable relative to said first and second sandwiching foils within said sandwich structure.

3. The method according to claims 1 or 2, said first and second foils being provided separately and being pre-fabricated prior to the laminating of the foils together in said sandwich structure.

4. The method according to claims 1 or 2, said first foil and/or said second foil being extruded prior to and in conjunction with the step of laminating said first and second foils together in said sandwich structure, and at a specific extrusion temperature, such as an extrusion temperature within the range 150°C - 270°C, such as 220°C - 230°C.

5. The method according to any of the claims 1-4, the polymer materials of said first foil and/or said second foil being made through heating of the polymer materials in question, the heating being carried out a heating temperature providing a softening point above 100 °C and preferably a melting point above 120 °C.

6. The method according to any of the claims 1-5, said bands being provided with 'Keder'-reinforcing strings of flexible polymer material.

7. The method according to any of the claims 1-6, said bands being interlayered between said first and second foils.

8. The method according to any of the claims 1-6, said bands being positioned on top of and laminated to the top surface of said first foil or alternatively said second foil.

9. The method according to any of the claims 1-8, said bands being continuous bands.

10. The method according to any of the claims 1-7, said bands being perforated or provided with apertures for allowing said first and second foils to be laminated together through apertures or perforations of said bands.

11. The method according to any of the claims 1-5, said bands being provided with mechanical fasteners such as zipper-like fastening elements, burr fasteners or mechanical eyelets etc.

12. The method according to any of the claims 1-11, said bands being made from PE, from PE, preferably HDPE, PP, preferably isotactic polypropylene homopolymer; TPO; POP; Polybutylene (Poly(1-butene)); block copolymers; crosslinked polymers such as EPDM, SBR, EPR, PIB, PEX, PIP, polyisobutylene and TPU; Plasticized PVC ; Polyester, preferably Polyethylene, and blends or mixtures of any of the above, preferably having a bimodal molecular weight distribution, being block copolymers or combinations of block and copolymers, and/or including low frictional fibres.

13. The method according to claim 6, said 'Keder'-reinforcing strings being interlayered in said bands prior to positioning said bands edgewise at said first and second foils.

14. The method according to claim 13, said 'Keder'-reinforcing strings being applied with a lubrication material such as a lubricating oil or wax prior to interlaying said 'Keder'-reinforcing strings in said bands.

15. The method according to claim 14, said strings being polymer fibre or wire material of polyvinylchloride, nylon, polypropylene, preferably isotactic polypropylene, polyethylene, preferably high density polyethylene polyester or polyesters, polyamide or polyamides, polyimide or polyimides, polyacrylonitrile or polyurethane or polyurethanes or polyvinylalcohols or a combination of the above materials.

16. A membrane, in particular a weather protection membrane for use in the field of house building or construction, in particular for use as a scaffold membrane, scaffold sheeting, tarpaulins, an underroof cover, a temporary roof cover, geo membranes, world aid shelters, military shelters, green house or agricultural membranes, festival or leisure tents, etc., comprising:
a reinforcing regularly laid, woven or non-woven fabric, grid, mesh or scrim comprising a dimensionally mechanical stable polymer fibre, filament or wire material, such as a homogeneous or non-homogeneous fibre material, e.g. a monofilament, a yarn, a tape, a split film, fibre or a multifilament based material, a woven, a braided, a non-woven or a combined woven and non-woven fibrous material,
a first foil of a polymer material, preferably a weather resistant polymer material of a single layer configuration or a multilayer configuration,
a second foil of polymer material, preferably a weather resistant polymer material of a single layer configuration or a multilayer configuration,
two bands of polymer material, preferably a weather resistant polymer material of a single layer configuration or a multilayer configuration including woven or non-woven layer or layers and exhibiting low frictional properties,
said reinforcing fabric, grid, mesh or scrim being interlayered in a sandwich structure between said first and second foils, and
said bands being positioned edgewise at said first and second foils, and providing an integral structure in which said bands are laminated integrally to one of said foils or both of said foils, and at least partly overlapping said reinforcing fabric, grid, mesh or scrim.

17. The membrane according to claim 16 and being moveable relative to said first and second sandwiching foils as said fabric, grid, mesh or scrim be coated with a lubricating material, such as a lubricating oil or wax which is substantially non-aggressive to said polymer materials of said first and second foils and substantially non-dissolvable within said polymer materials of said first and second foils, said reinforcing fabric, grid, mesh or scrim being movable relative to said first and second sandwiching foils as said fabric, grid, mesh or scrim be coated with a lubricating material such as a lubricating oil or wax which is substantially non-aggressive to said polymer materials of said first and second foils and substantially non-dissolvable within said polymer materials of said first and second foils.

18. The membrane according to claims 16 or 17, said first and second polymer materials together constituting less than 90%, such as 80% or 50 - 80%, e.g. 60 - 80% or 70 - 80%, or alternatively 50 - 60%, 60 - 70%, 70 - 80% or 80 - 90% of the total weight of said membrane.

19. The membrane according to any of the claims 16-18, said membrane exhibiting a specific tear strength/film thickness of the order of more than 800 N/mm thickness, preferably more than 1000 N/mm thickness, such as more than 1200 N/mm or even more than 1500 N/mm (measured according to ISO 6381/1).

20. The membrane according to claim 19, said membrane exhibiting a ratio as expected in tear strength to weight of higher than 1,0 N/(g/m²), preferably higher than 1,4 N/(g/m²).

21. The membrane according to any of the claims 16-20, said membrane exhibiting a puncture resistance, i.e. puncture resistance/film thickness of more than 250 N/mm thickness, preferably more than 300 N/mm or even more than 350 N/mm (according to NT Build 336/1988-9 except with a 10mm chisel).

22. The membrane according to any of the claims 16-21, said polymer fibre or wire material of said reinforcing fabric, grid, mesh or scrim being polypropylene, preferably isotactic polypropylene, polyethylene, preferably high density polyethylene polyester or polyesters, preferably polyethylenterephthalat, polyamide or polyamides, polyimide or polyimides, polyacrylonitrile or polyurethane or polyurethanes or polyvinylalcohols or a combination of the above materials.

23. The membrane according to any of the claims 16-22, said reinforcing fabric, grid, mesh or scrim being made of a polymer fibre, filament or wire material of a thickness of 0.1 - 1 mm, preferably 0.1 - 0.4 mm or of a thickness of 0.1 - 0.15 mm, 0.15 - 0.2 mm, 0.2 - 0.25 mm, 0.25 - 0.3 mm, 0.3 - 0.35 mm, 0.35 - 0.4 mm, 0.4 - 0.45 mm, 0.45 - 0.5 mm, 0.5 - 0.55 mm, 0.55 - 0.6 mm, 0.6 - 0.65 mm, 0.65 - 0.7 mm, 0.7 - 0.75 mm, 0.75 - 0.8 mm, 0.8 - 0.85 mm, 0.85 - 0.9 mm, 0.9 - 0.95 mm, 0.95 - 1 mm, and/or said reinforcing fabric, grid, mesh or scrim being made of polymer fibre, filament or wire material of a thickness of 300 - 4000 dtex (g/10.000m), e.g. 1000 - 3000 dtex, preferably 1500 - 2500 dtex, or of a thickness of 300 - 400 dtex, 400 - 500 dtex, 500 - 600 dtex, 600 - 700 dtex, 700 - 800 dtex, 800 - 900 dtex, 900 - 1000 dtex, 1000 1250 dtex, 1250 - 1500 dtex, 1500 - 1750 dtex, 1750 - 2000 dtex, 2000 - 2500 dtex, 2500 - 3000 dtex, 3000 -3500 dtex or 3500 - 4000 dtex.

24. The membrane according to any of the claims 16-23, said mesh defining a mesh size of the order of 2 - 40 mm, such as 4 - 12 mm, preferably 5 - 10 mm, such as approximately 10 mm, or a mesh size of the order of 2 - 3 mm, 3 - 5 mm. 5 - 7 mm, 7 - 9 mm, 9 - 11 mm, 11 - 13 mm, 13 - 15 mm, 15 - 20 mm, 20 - 25 mm, 25 -30 mm, 30 - 35 mm or 35 - 40 mm.

25. The membrane according to claim 24, the area of contact between said first and second foils in said sandwich structure constituting more than 40%, such as 40 - 60%, preferably 60 - 70% of the overall surface area of said membrane.

26. The membrane according to any o the claims 16-25, said reinforcing mesh defining a grid of a square configuration, a grid of a rectangular configuration, a grid of a rhombic configuration or a grid of any other geometrical configuration including triangular, elliptical, circular or any other geometrical configuration including linear or curved boundary lines including convex or concave configurations or any combination of the above geometrical configurations.
